Europäisches Patentamt

European Patent Office

Office européen des brevets

(11) Publication number: **0 169 629**
**A2**

(12) # EUROPEAN PATENT APPLICATION

(21) Application number: **85302514.6**

(22) Date of filing: **10.04.85**

(51) Int. Cl.⁴: **G 21 C 19/36**

(30) Priority: **05.07.84 JP 140163/84**
**05.07.84 JP 140164/84**

(43) Date of publication of application:
**29.01.86 Bulletin 86/5**

(84) Designated Contracting States:
**DE FR GB**

(71) Applicant: **KABUSHIKI KAISHA KOBE SEIKO SHO**
**3-18 1-chome, Wakinohama-cho Chuo-ku**
**Kobe 651(JP)**

(72) Inventor: **Okada, Ken**
**3-48-5 Nishihara**
**Shibuya-ku Tokyo(JP)**

(74) Representative: **Wright, Hugh Ronald et al,**
**Brookes & Martin 52/54 High Holborn**
**London WC1V 6SE(GB)**

(54) **Cladding separation method for a spent nuclear fuel rod.**

(57) A separation method for a spent nuclear fuel rod consisting of a cladding and a nuclear fuel contained therein, comprising moving the spent nuclear fuel rod by means of one or more sets of nipping rollers, each of the nipping roller sets consisting of a pair of rollers disposed so as to be inclined relative to the longitudinal direction of the nuclear fuel rod and cross each other, thereby compressing the nuclear fuel rod from the outer periphery thereof, and then taking out the nuclear fuel from the interior of the cladding. The cladding thus compressed may be cut by shearing from the outer peripheral surface side thereof along its axial direction in two or more circumferential positions and thereby divided longitudinally, followed by withdrawal of the nuclear fuel from the interior of the cladding.

EP 0 169 629 A2

# SEPARATION METHOD FOR A SPENT NUCLEAR FUEL ROD

The present invention relates to a separation method for a spent nuclear fuel rod.

Heretofore, various proposals have been made for safely reprocessing spent nuclear fuel generated in nuclear power plants, as disclosed in Japanese Patent Laid Open Publication nos. 43100/74 and 104294/81 and Patent Publication no. 25480/84. According to these proposals, a nuclear fuel rod is cut transversely into short pieces, which are then treated with nitric acid in a dissolver to separate the cladding and fuel contained therein from each other, and the cladding is separately processed as hull. This dissolution is disadvantageous in that it takes a long time to dissolve the fuel itself and to remove the fuel deposited on the inner surface of the cladding. An additional problem exists in that the entire process is complicated and troublesome because the cladding must be decontaminated and processed separately after the dissolution processing.

The present invention has been accomplished for eliminating the above-mentioned drawbacks of the prior art, and it is the object thereof to provide a method which permits an efficient separation processing for spent nuclear fuel rod through a simple process.

According to the present invention there is provided a separation method for a spent nuclear fuel rod consisting of nuclear fuel contained within a cladding, which method comprises moving the spent nuclear fuel rod by means of one or more sets of nipping rollers, each of said nipping roller sets consisting of a pair of rollers disposed so as to be inclined relative to the longitudinal direction of the nuclear fuel rod and crossed with respect to each other, thereby compressing the nuclear fuel rod from the outer periphery thereof, and removing the nuclear fuel from the interior of the cladding.

According to the present invention there is also provided a separation method for a spent nuclear fuel rod consisting of nuclear fuel contained within a cladding, which method comprises moving the spent nuclear fuel rod by means of one or more sets of nipping rollers, each of said nipping rollers sets consisting of a pair of rollers disposed so as to be inclined relative to the longitudinal direction of the nuclear fuel rod and crossed with respect to each other, thereby compressing the nuclear fuel rod from the outer periphery thereof, then forming cuts in the cladding from the outer peripheral surface side thereof by shearing along the axial direction of the cladding in two or more circumferential positions to divide the cladding longitudinally, and then removing the nuclear fuel from the interior of the cladding.

In the drawings:

Figure 1 illustrates an entire process according to an embodiment of the present invention;

Figure 2 is a plan view of a method cutting and a method deflective pipe expanding thereof; and

Figures 3(a) and 3(b) are front views of the two methods of Figure 2.

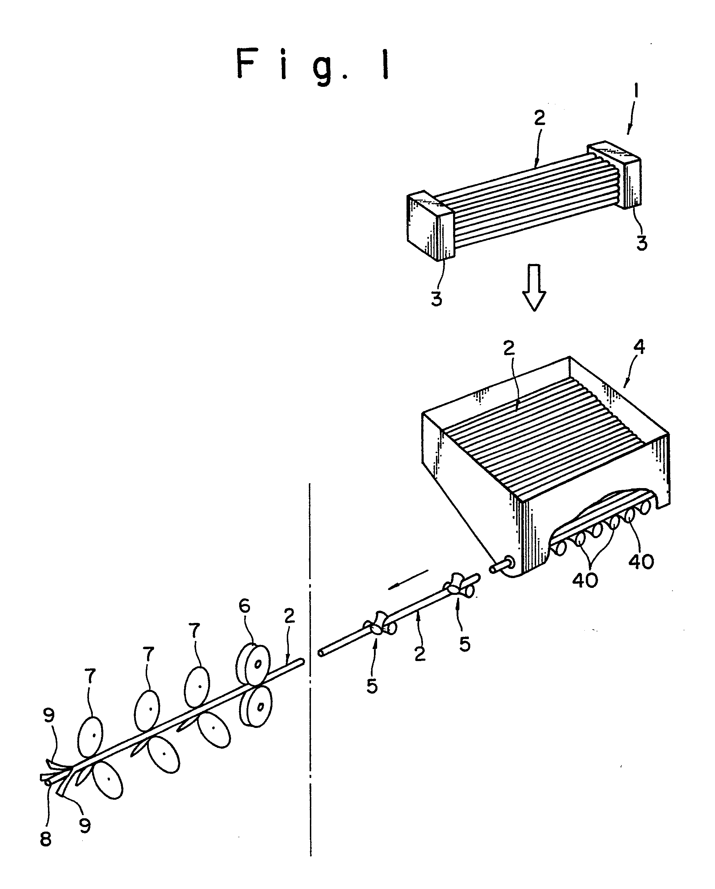

In Figure 1, nuclear fuel rods 2 with cladding in a spent nuclear fuel assembly 1 are cut and separated from end portions 3 by suitable means and then received in hopper 4. Then, from a lower side portion of the hopper 4, the nuclear fuel rods 2 are moved out of the hopper one by one by means of delivery rollers 40. The outer periphery of each rod 2 is gripped by nipping rollers 5, whereby it is expanded deflectively.

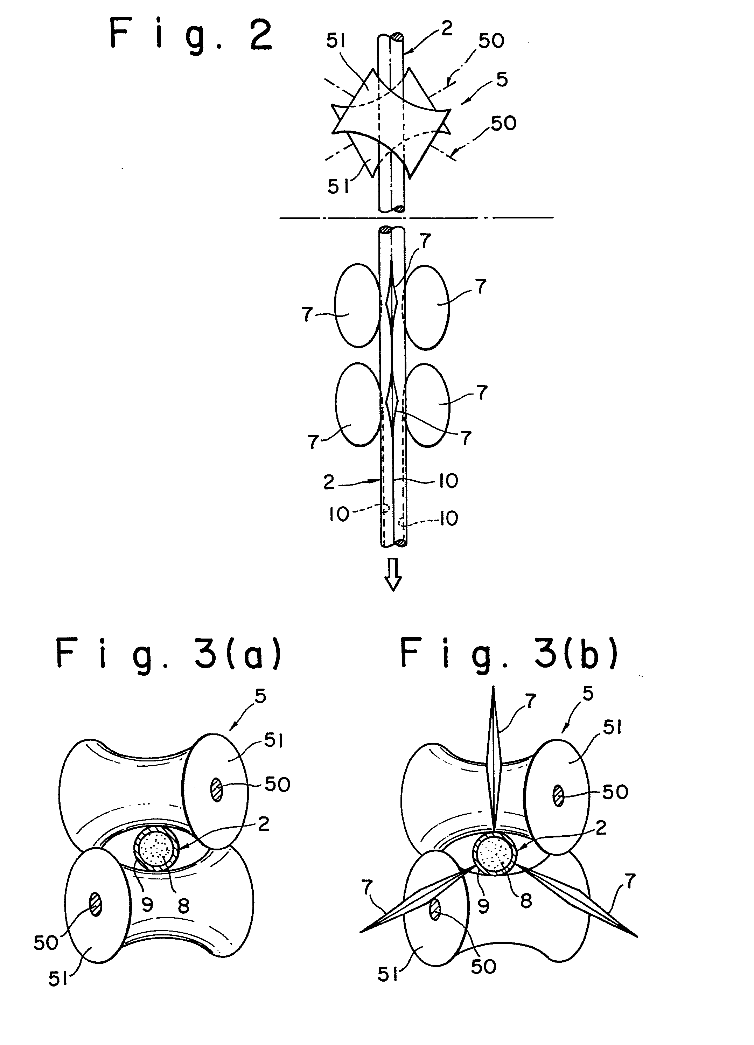

The nipping rollers 5, as shown in Figs. 2 and 3(a), comprise a pair of rollers 51 each having a roller surface of a curvature which is smaller than that of the outer peripheral surface of the nuclear fuel rod 2 in side shape. The rollers 51 are disposed so as to be inclined relative to the longitudinal direction of the nuclear fuel rod 2 and crossed with respect to each other, and each roller 51 is so constructed as to rotate about a shaft 50. Therefore, while passing through the rollers 51, the nuclear fuel rod 2 is compressed and bent from its outer periphery and subject to rotational force and axial moving force, whereby a cladding 9 is expanded so that a gap is formed between the cladding 9 and the nuclear fuel 8 contained therein. Thus, the cladding 9 is subject to plastic deformation by the deflective expansion; as a result, its diameter increases and at the same time the fuel 8 and the cladding 9 are separated. Then, the fuel 8 is removed from inside the cladding 9 by vibrating the nuclear fuel rod 2 by hydraulic or gas pressure pushing it out with a push rod. To facilitate this removal, the nuclear fuel rod 2 may be cut into shorter lengths. The cladding 9 after separation of the fuel 8 is separately compressed. After the cladding expansion, the fuel may be pushed out with a rod or by hydraulic or gas pressure. Alternatively the cladding may be cut longitudinally.

Various types of nipping rollers may be adopted, not only concave rollers as shown in the drawings but also a cylindrical type or even a convex roller which is larger in diameter at its centre.

In any case, the nuclear fuel rod is moved while being nipped with a pair of rollers to effect the desired deflective pipe expansion. The nipping rollers may be disposed in vertical, transverse or any other direction. Further, more than one set of nipping rollers may be disposed in the direction of movement of the nuclear fuel rod 2 to thereby effect proper separation of the fuel 8 from the cladding 9.

The use of tsuzumi (concave) type rollers for the deflective pipe expansion is desirable from the point of view of efficiency because there is a linear contact with the cladding 9. In the case where a tsuzumi-like roller is used as one of the nipping rollers, the other roller of the pair may consist of two or more rollers because of the linear contact portion with the cladding. Thus, "a pair of rollers" referred to herein includes the case where one comprises a single roller and the other comprises two rollers as just described.

According to another embodiment of the present invention, as shown in Figs. 1, 2 and 3(b), the surface of the nuclear fuel rod 2 which has been subjected to the deflective expansion is then cut longitudinally in three circumferential positions by means of rotary blades 7 and thereby divided into three, thus permitting separation of the nuclear fuel 8 from the cladding 9.

The rotary blade 7 comprises a rotary disc having a cutting edge formed on the outer periphery thereof. When this cutting edge is brought into pressure contact with the outer peripheral surface of the clad pipe, a cut 10 is formed by shearing along the axial direction of the cladding. Preferably, the cutting of the nuclear fuel rod 2 is free from swarf, so it is necessary to effect the cutting by shearing, and to this end the cutting edsge is brought into pressure contact with the cladding from the outer periphery of the tube or cladding during rotation to thereby form a cut by shearing. In this embodiment, the cut 10 is formed in three circumferential positions to divide the cladding 9 into three. The rotary blades 7 are disposed in three circumferential positions. There are provided three sets of blades spaced in the direction of movement of the nuclear fuel rod 2 to successively deepen the cut 10. For example, one-fourth of the thickness of the clad pipe 9 is sheared by the first set of rotary blades 7, then up to a half of the thickness is sheared by the second set and the remaining thickness is sheared by the third set, whereby the cladding can be cut smoothly without producing swarf. In addition, since the cladding 9 is cut while being pressed down from its outer peripheral surface, the tube (or cladding) 9 which has been divided and has become rectangular is bent and separates naturally from the fuel 8 as shown in Figure 1.

When cutting the nuclear fuel rod 2 with the rotary blades 7, the rod 2 may be moved by rollers 6 and rotary blades 7, or it may be moved by any other suitable transfer means. The positioning of the rotary blades in the circumferential and longitudinal directions of the nuclear fuel rod 2 may be selected to suit the circumstances. Moreover, it is not always necessary to provide the pinch rollers 6. Further, the rotary blades 7 may be replaced by other cutting means.

By the above processing, the fuel 8 and the cladding 9 are separated from each other and withdrawn continuously, thus eliminating the need to immerse the nuclear fuel rod in nitric acid for a long time to separate the fuel deposited on the inner surface of the cladding 9, and the nuclear fuel rod separation can be done extremely simply in a continuous process.

The deflective cladding expansion using rolls has the following features.

1.    We can use Multi-stage rolls which were originally developed for pipe straightening purpose, but it has been found that clash (difference between cladding outside diameter and roll spacing) can be utilised effectively in the deflective tube expansion to separate the fuel from the tube.    A crushing straightening action alone is insufficient, so we introduce offset (deviation of the second roll centre from pass centre) and bend (deviation of the fourth lower roll surface from the third upper roll lower-surface) are also other effective factors.

2.    A comparison of the pipe expanding action was made between $5^{O}$-inclined rolls and flat rolls, caliber rolls (grooved rolls), in which the 0.2-0.3 clash inclined rolls expanded the pipe 0.15mm in one pass, while the flat and caliber rolls expanded the pipe only 0.10-0.30mm in 20-50 passes.    Besides, in the former case, the cladding was reduced in length (expanded in proportion thereto), while the latter tends to be rather elongated and reduced in thickness and exhibited large variations.

3.    Cladding samples were subjected to expansion by means of an inclined roll machine using five sets of concave rolls.    As a result, tube expansions of 0.06-0.25mm (1-4%) were observed for 0.10-0.15mm clashes of the two sets of centrally located rolls. Also when only one set of rolls were used at a clash of 0.15mm, there was observed a tube expansion of 0.20mm.

4.  Thus, in the use of inclined rolls, although there is a difference in effect depending on the shape of rolls [concave, cylindrical or tsuzumi (hand drum type)], there is a separating effect under the action of an oblique deviation intermediate between cylindrical and directions from the fuel, and at the same time a deflective expanding action is exerted obliquely on the cladding, thus permitting an extremely effective tube expansion in plastic processing.

As to the tube expanding action, using two sets of rolls is effective whereby a compressive stress is exerted on the cladding while being compressed by the two sets of rolls and so the tube shrinks in the longitudinal direction and at the same time expands in proportion thereto. But the tube expanding effect can be effected by only one set of rolls.

Thus a nuclear fuel rod may be subjected to a mechanical process such as a deflective expansion continuously from the outer periphery thereof to separate the cladding and the fuel from each other, and the cladding is then subjected to a process for volume reduction. Thus, the separation process for nuclear fuel rod can be done in a highly efficient manner.

CLAIMS

1.  A separation method for a spent nuclear fuel rod (2) consisting of nuclear fuel (8) contained within a cladding (9), which method comprises moving the spent nuclear fuel rod (2) by means of one or more sets of nipping rollers (5), each of said nipping roller sets (5) consisting of a pair of rollers (51,51) disposed so as to be inclined relative to the longitudinal direction of the nuclear fuel rod (2) and crossed with respect to each other, thereby compressing the nuclear fuel rod (2) from the outer periphery thereof, and removing the nuclear fuel (8) from the interior of the cladding (9).

2.  A separation method for a spent nuclear fuel rod (2) consisting of nuclear fuel (8) contained within a cladding (9), which method comprises moving the spent nuclear fuel rod (2) by means of one or more sets of nipping rollers (5), each of said nipping rollers sets (5) consisting of a pair of rollers (51,51) disposed so as to be inclined relative to the longitudinal direction of the nuclear fuel rod (2) and crossed with respect to each other, thereby compressing the nuclear fuel rod (2) from the outer periphery thereof, then forming cuts (10) in the cladding (9) from the outer peripheral surface side thereof by shearing along the axial direction of the cladding (9) in two or more circumferential positions to divide the cladding (9) longitudinally, and then removing the nuclear fuel (8) from the interior of the cladding (9).

3.  A separation method for a spent nuclear fuel rod (2) consisting nuclear fuel (8) contained within a cladding (9), which method comprises moving the spent nuclear fuel rod (2) by means of one or more sets of nipping rollers (5), each of said nipping rollers sets (5) consisting of a pair of rollers (51,51) each having a roller surface of a curvature smaller than that of the outer peripheral surface of the cladding (9) and disposed so as to be inclined relative to the longitudinal direction of the nuclear fuel rod (2) and crossed with respect to each other, thereby compressing the nuclear fuel rod (2) from the outer periphery thereof, then forming cuts (10) in the cladding (9) from the outer peripheral surface side thereof by shearing along the axial direction of the cladding (9) in two or more circumferential positions to divide the cladding (9) longitudinally, and then removing the nuclear fuel (8) from the interior of the cladding (9).

4.  A separation method for a spent nuclear fuel rod (2) consisting of nuclear fuel (8) contained with a cladding (9), which method comprises moving the spent nuclear fuel rod (2) by means of one or more sets of nipping rollers (5), each of seaid nipping roller sets (5) consisting of a pair of rollers (51,51) each having a roller surface of a curvature smaller than that of the outer peripheral surface of the cladding (9) and disposed so as to be inclined relative to the longitudinal direction of the nuclear fuel rod (2) and crossed with respect to each other, thereby compressing the nuclear fuel rod (2) from the outer periphery thereof, then forming cuts (10) in the cladding (9) from the outer peripheral surface side thereof along the axial direction of the cladding (9) in two or more circumferential positions by shearing using rotary blades (7), the rotary blades each comprising a rotary disc (7) having a cutting edge formed on the outer periphery thereof, to thereby divide the cladding (9) longitudinally, and then removing the nuclear fuel (8) from the interior of the cladding (9).

Fig. 1

0169629

F i g. 2

F i g. 3(a)

F i g. 3(b)